Europäisches Patentamt

European Patent Office

Office européen des brevets

(19)

(11) Veröffentlichungsnummer: **0 269 623**
**B1**

(12) **EUROPÄISCHE PATENTSCHRIFT**

(45) Veröffentlichungstag der Patentschrift: **31.10.90**

(21) Anmeldenummer: **86904815.7**

(22) Anmeldetag: **29.07.86**

(86) Internationale Anmeldenummer:
**PCT/EP86/00447**

(87) Internationale Veröffentlichungsnummer:
**WO 87/01050 26.02.87 Gazette 87/05**

(51) Int. Cl.⁵: **B 01 D 46/10,** B 01 D 46/12,
B 01 D 53/02

(54) **VERFAHREN ZUR ABTRENNUNG VON FESTEN UND GASFÖRMIGEN SCHADSTOFFEN AUS HEISSEN GASEN.**

(30) Priorität: **16.08.85 DE 3529272**

(43) Veröffentlichungstag der Anmeldung:
**08.06.88 Patentblatt 88/23**

(45) Bekanntmachung des Hinweises auf die
Patenterteilung:
**31.10.90 Patentblatt 90/44**

(84) Benannte Vertragsstaaten:
**AT BE CH DE FR GB IT LI NL SE**

(56) Entgegenhaltungen:
**DE-A-2 150 687**
**US-A-4 512 787**

(73) Patentinhaber: **Bergwerksverband GmbH**
**Franz-Fischer-Weg 61**
**D-4300 Essen 13 (DE)**

(72) Erfinder: **ROMEY, Ingo**
**Sandkamp 25**
**D-4224 Hünxe 2 (DE)**
Erfinder: **AHLAND, Erwin**
**Waldsaum 48**
**D-4300 Essen 1 (DE)**
Erfinder: **PASS, Reinhard**
**Hagelkreuz 32**
**D-4300 Essen 1 (DE)**
Erfinder: **VERFUSS, Franz**
**Goethe-Strasse 8**
**D-4350 Recklinghausen (DE)**

Courier Press, Leamington Spa, England.

**Beschreibung**

Die Erfindung betrifft ein Verfahren zur gleichzeitigen Abtrennung von festen und gasförmigen Schadstoffen gemäß Oberbegriff des Anspruchs 1.

Es ist bekannt, daß die filternde Staubabscheidung auch für die Entschwefelung genutzt werden kann. Dabei werden dem Gasstrom alkalische Additive w,ie z. B. Calciumhydroxid zur Bindung von Schwefeloxiden zugegeben (W. Schultheß, Brennstoff-Wärme-Kraft. Bd. 36 (1984). Nr. 10, S. 420 - 426). Diese Additive sind nach ihrer Reaktion zusammen mit dem Staub aus dem Gasstrom zu entfernen. Hierzu werden Gewebefilter eingesetzt, bei denen der Filtervorgang in und an dem sich bildenden Filterkuchen stattfindet. Es hat sich gezeigt, daß die Reaktion des Ca(OH)$_2$ mit SO$_2$ durch Nachreaktion im Filter deutlich verstärkt wird.

Bei den Gewebefiltern findet jedoch eine irreversible Einlagerung von feinsten Partikeln im Filtergewebe statt (Tiefenfiltration). Dadurch bedingte hohe Strömungswiderstände und eine hohe Abreinigungsfrequenz führen zu übermäßigem Verschleiß. Außerdem sind die bekannten Gewebefilter nur bis ca. 250°C verwendbar (W. Schultheß, Brennstoff-Wärme-Kraft, Bd 36 (1984), Nr. 10, S. 422) und besonders bei hohen Feststoffkonzentrationen kann die Verwendung einer Vorabscheidestufe notwendig sein.

In der US-A-4512787 wird ein Verfahren offenbart, bei dem die Rauchgase mittels mehrerer Stahlgewebefilter gefiltert werden. Somit besteht hier zwar nicht das Problem der Temperaturlimitierung auf 250°C wie bei anderen Gewebefiltern, es werden jedoch feinste Partikel irreversibel eingelagert, woraus sich hohe Strömungswiderstände ergeben, was eine häufige Reinigung der Filter erforderlich macht. Nach der US-A-45 12787 sind ferner mehrere Filter hintereinander geschaltet, es liegt somit ein mehrstufiges Filterverfahren vor.

Der Erfindung liegt die Aufgabe zugrunde, Verfahren für die Abtrennung von festen und gasförmigen Schadstoffen aus heißen Gasen so zu verbessern, daß die vorgenannten Nachteile vermieden werden und insbesondere keine Vorabscheidestufe nötig ist.

Diese Aufgabe wird bei dem erfindungsgemäßen Verfahren dadurch gelöst, daß die mit festen und gasförmigen Schadstoffen beladenen heißen Gase über einen Filtrationsapparat mit metallischen Spaltfilterkerzen geleitet werden.

Ein derartiger Filtrationsapparat mit metallischen Spaltfilterkerzen ist aus der Flüssigfiltration bekannt (DE-C-28 28 976, DE-A-27 06 938). Bei den Spaltfilterkerzen findet eine Tiefenfiltration und damit eine Verstopfung nicht statt. Die mögliche Filtrationsdauer wird ausschließlich durch die Durchlässigkeit des sich aufbauenden Filterkuchens bestimmt. Auf eine bei hohen Feststoffgehalten bisher notwendige Vorentstaubung kann verzichtet werden. Temperatur- und korrosionsbedingte Einschränkungen für den Einsatz von metallischen Spaltfilterkerzen können durch geeignete Werkstoffwahl ausgeschlossen werden, so daß sich das erfindungsgemäße Verfahren besonders gut für die Abscheidung bei hohen Temperaturen eignet. Die Spaltfilter werden bevorzugt mit einer Spaltbreite von 0,05 - 0,15 mm eingesetzt.

Die Haftung des Filterkuchens auf der Oberfläche der Spaltfilterkerze ist gering, so daß der Kuchen schnell und einfach entfernt werden kann. Aus diesem Grunde sind die Spaltfilterkerzen vor allem für Verfahren gut geeignet, bei denen Additive zur Bindung gasförmiger Schadstoffe zugegeben werden, da die Additive wieder aus dem Gasstrom entfernt werden müssen und somit das Filtrationsverfahren zusätzlich belasten.

Als Additive können sowohl Substanzen zugesetzt werden, die die gasförmigen Schadstoffe durch chemische Reaktion (Chemisorption) binden, als auch Stoffe die die gasförmigen Bestandteile durch Adsorption (Physisorption) binden. Dabei werden basische Metallverbindungen, wie z.B. Calciumhydroxid, Calciumcarbonat und Eisenhydroxid und Adsorbentien wie Aktivkohle/Aktivkoks, Siliciumoxid, Aluminiumoxid sowie Aluminiumsilikate verwendet. Die Additive haben eine Korngröße von 0,05 - 0,3 mm. Durch diese Korngröße ist gewährleistet, daß stets ein durchlässiger Filterkuchen aufgebaut wird.

Je nach Art und Temperatur des Gases und abhängig von der Wahl der Additive wird das die gasförmigen Schadstoffe bindende Additiv entweder dem heißen Gasstrom zugemischt oder vor der Filtration auf die Spaltfilterkerzen gebracht. Bei Feuerungsanlagen kann das Additiv direkt in die Feuerung dosiert werden. Die Körnung des Additivs wird erfindungsgemäß so gewählt, daß auch bei Abtrennung feinster Feststoffe ein noch hinreichend durchlässiger Filterkuchen entsteht. Der daraus resultierende niedrigere Strömungswiderstand des Filterkuchens erlaubt verlängerte Filtrationszyklen und eine größere Filterkuchendicke. Die Erhöhung der Filterkuchenschichtdicke bedingt verlängerte Verweilzeiten des Gases im Filterkuchen. Dadurch wird die Abscheidung der gasförmigen Schadstoffe durch Nachreaktion mit dem Additiv erhöht.

Mit dem erfindungsgemäßen Verfahren können heiße Gase gereinigt werden, wie sie z.B. in Feuerungs- und Kraftwerksanlagen, bei der Kohlevergasung, bei der Eisen- und Stahlerzeugung sowie in der Zement- und Kalkindustrie anfallen.

Bei der Anwendung des Verfahrens werden die Grenzwerte der Staub- und Schwefeldioxid-Emissionen für Feuerungsanlagen, wie sie durch die Technische Anleitung zur Reinhaltung der Luft (TA Luft) vorgeschrieben sind, erreicht.

Die Erfindung wird nachfolgend anhand der Zeichnung und der Beispiele näher beschrieben. Die Zeichnung zeigt in

Fig. 1 eine schematische Darstellung der Verfahrensführung der Entstaubung und Teilentschwefelung einer Feuerungsanlage, und in

Fig. 2 eine schematische Darstellung der Verfahrensführung, bei der das Additiv vor der Filtration auf die Spaltfilterkerzen aufgebracht wird, und in

Fig. 3 eine schematische Darstellung der Verfahrensführung, bei der das Additiv dem Gasstrom zugegeben wird.

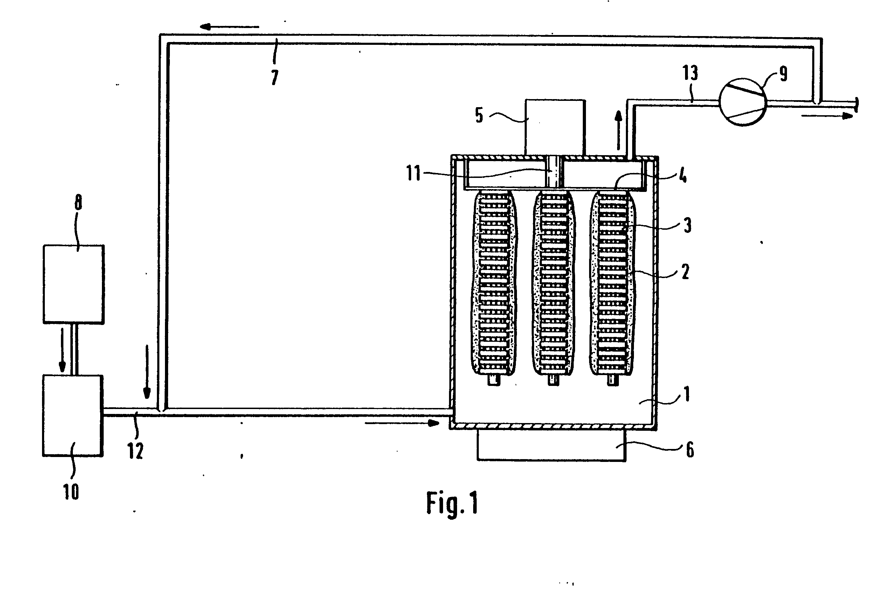

Aus Fig. 1 geht hervor, daß einer Feuerungsanlage 10 aus einem Silo 8 ein Additiv zugegeben wird. Über eine Leitung 12 wird das heiße Gas in den Filtrationsapparat 1 geleitet. Der Filtrationsapparat 1 besteht aus mehreren senkrecht angeordneten Spaltfilterkerzen 3 mit einer definierten Spaltweite, auf denen sich ein Filterkuchen 2 abscheidet. Die Spaltfilterkerzen 3 sind über eine Platte 4 mit einer pneumatisch arbeitenden Klopfvorrichtung 5 mit einem Klopfstößel 11 verbunden. Nach Erreichen eines vorgegebenen Strömungswiderstandes können die Spaltfilterkerzen 3 durch Abklopfen vom Filterkuchen 2 gereinigt werden. Der Filterkuchen 2 wird über eine Schleuse 6 ausgetragen. Das von festen und gasförmigen Bestandteilen gereinigte Gas verläßt über eine Leitung 13 und ein Gebläse 9 den Filtrationsapparat 1. Bis der Filterkuchen 2 aufgebaut ist, kann im Anfahrbetrieb über eine Gasrückführleitung 7 dem Filtrationsapparat 1 das noch leicht verunreinigte Gas erneut zugegeben werden.

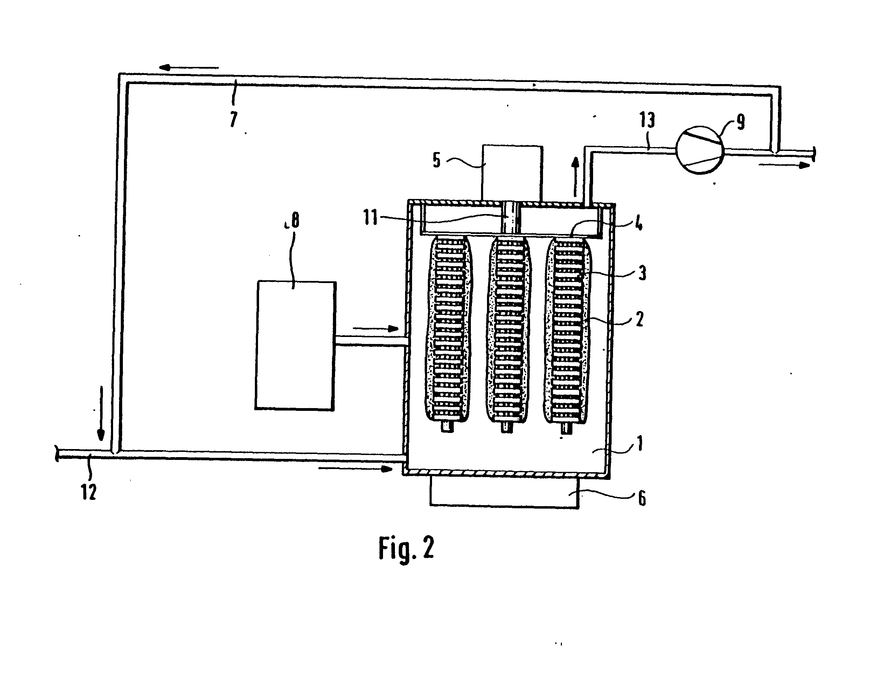

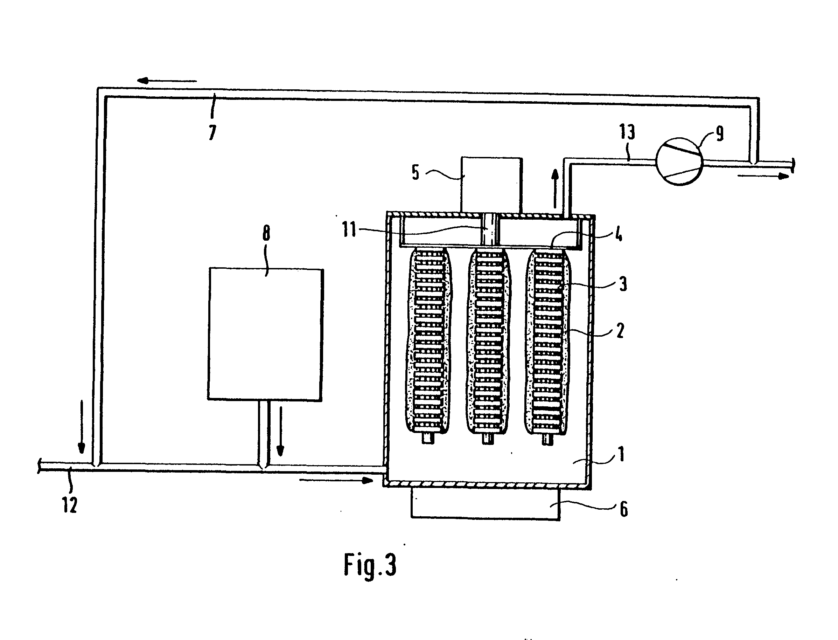

In Fig. 2 und 3 haben die Bezugszeichen 1 bis 13 die gleiche Bedeutung wie in der Fig. 1.

Beispiel 1

In einer Versuchsanlage gemäß Fig. 1 werden der Feuerungsanlage 10 4,4% (bezogen auf Kohle) Kalkhydrat (Ca(OH)$_2$) in einer Körnung von 0,05 - 0,3 mm aus dem Silo 8 zugegeben. Diese Menge entspricht einem zweifach stöchiometrischen Überschuß, bezogen auf den in der Kohle enthaltenen Schwefel von 1%.

Das Rauchgas wird durch Leitung 12 in den Filtrationsapparat 1 geleitet. Es hat einen Feststoffgehalt von 10 g/m$^3$ und eine Temperatur von 140°C. Der SO$_2$-Gehalt würde ohne die Kombination von Kalkhydratzugabe und Feststoffabtrennung 1,7 g/m$^3$ betragen. Der Druckverlust beträgt zu Beginn der Filtration 0,3 kPa. Nach Durchleiten von 15 m$^3$ Gas/m$^2$ Filterfläche hat sich ein dünner Filterkuchen 2 gebildet, der schon zu einem Staubabscheidegrad von 99,5% führt. Das bis zur ausreichenden Kuchenbildung hindurchtretende, noch leicht verunreinigte Gas wird über die Gasrückführleitung 7 dem Filtrationsapparat 1 erneut zugeführt. Das gereinigte Gas hat einen SO$_2$-Gehalt von 1 g/m$^3$ (Entschwefelungsgrad 41%). Die Staubabscheidung verbessert sich während der Filtration auf einen Wert von 10 mg/m$^3$. Nach 1,5 h Filtrationsdauer beträgt die Filterkuchenstärke 4 mm, der Druckverlust ist auf 0,9 kPa gestiegen. Durch die Klopfvorrichtung 5 mit Klopfstößel 11 werden die Spaltfilterkerzen 3 axial beschleunigt, so daß der Filterkuchen 2 aufbricht und vollständig von den Spaltfilterkerzen 3 entfernt wird. Über die Schleuse 6 kann der abgeschiedene Staub ausgetragen werden. Anschließende Messungen des Strömungswiderstandes der unbeladenen Spaltfilterkerzen 3 ergeben wieder den Wert von 0,3 kpa. Verstopfungen der Spaltfilterkerzen 3 sind auch bei den folgenden Abscheidungszyklen nicht aufgetreten.

Beispiel 2

Ein Rohgas mit einem H$_2$S-Gehalt von 20 g/m$^3$, einem Feststoffgehalt von 100 g/m$^3$ und einer Temperatur von 550°C wird durch eine Versuchsanlage gemäß Fig. 2 geleitet. Dieses Gas entspricht dem Rohgas einer Kohledruckvergasungsanlage. Die Spaltfilterkerzen 3 haben vor der Beaufschlagung mit dem Rohgas einen ca. 10 mm starken Filterkuchen 2 aus Kalkhydrat (Ca(OH)$_2$) in der Körnung von 0,05 - 0,25 mm erhalten. Die Strömungsgeschwindigkeit beträgt 0,042 m/s. Nach Erreichen eines Strömungswiderstandes von 1,0 kPa wird der Filterkuchen 2 entfernt. Wegen des hohen Feststoffgehaltes beträgt die Abreinigungsfrequenz 3 h$^{-1}$. Bei einer durchschnittlichen Verweilzeit des Gases im Filterkuchen 2 von 0,1 bis 0,2 s wurde eine H$_2$S-Konzentration im Reingas von 1 g/m$^3$ erreicht (Entschwefelungsgrad 95%). Der Feststoffgehalt des Reingases beträgt 15 mg/m$^3$.

Beispiel 3

Das Rohgas aus Beispiel 2 wird mit 35 g/m$^3$ Kalkhydrat (CA(OH)$_2$) in einer Körnung von 0,05 - 0,25 mm versetzt und durch eine Versuchsanlage gemäß Fig. 3 geleitet. Bei einer Strömungsgeschwindigkeit von 0,05 m/s wird bis zu einem Strömungswiderstand von 1 kPa filtriert. Die Reinigungsfrequenz beträgt 4 h$^{-1}$. Die Staubbeladung des Reingases beträgt weniger als 20 mg/m$^3$. Der H$_2$S-Gehalt wird von 20 g/m$^3$ auf 8 g/m$^3$ gesenkt (Entschwefelungsgrad 60%).

Beispiel 4

Eine Filterschicht aus Aktivkohle in einer Körnung von 0,05 - 0,3 mm wird mit Reingas, wie in Fig. 2 dargestellt, in einer Schichtdicke von 10 mm auf die Spaltfilterkerzen 3 aufgebracht. Das Rauchgas aus Beispiel 1 wird anschließend mit einer Strömungsgeschwindigkeit von 0,05 m/s durch den Filtrationsapparat 1 geleitet. Nach Erreichen eines Strömungswiderstandes von 1,2 kPa wird der Filterkuchen 2 entfernt. Die Reinigungsfrequenz beträgt 0,5 h$^{-1}$. Der SO$_2$-Gehalt des Reingases beträgt 1 g/m$^3$ (Entschwefelungsgrad 40%) und der Feststoffgehalt 15 mg/m$^3$.

**Patentansprüche**

1. Verfahren zur gleichzeitigen Abtrennung von festen und gasförmigen Schadstoffen aus heißen insbesondere schwefelhaltigen Gasen mit metallischen Filtern, die einen Filterkuchen enthalten unter Zugaben von Additiven, dadurch gekennzeichnet, daß die heißen Gase durch einen Filtrationsapparat mit metallischen Spaltfilterkerzen geleitet werden.

2. Verfahren nach Anspruch 1, dadurch gekennzeichnet, daß physisorptiv bindende Additive (Adsorbentien) zugesetzt werden.

3. Verfahren nach Anspruch 2, dadurch gekennzeichnet, daß als Adsorbentien Aktivkohle/Aktivkoks, Siliciumoxid, Aluminiumoxid oder Aluminiumsilikat zugesetzt werden.

4. Verfahren nach den Ansprüchen 1 bis 3, dadurch gekennzeinet, daß die Additive eine Korngröße von 0,05 bis 0,3 mm aufweisen.

5. Verfahren nach den Ansprüchen 1 bis 4, dadurch gekennzeichnet, daß die Additive vor der Filtration auf die Spaltfilterkerzen aufgebracht werden.

## Revendications

1. Procédé pour la séparation simultanée de substances nuisibles, solides et gazeuses, d'avec des gaz chauds, en particulier sulfureux, au moyen de filtres métalliques qui contiennent un tourteau de filtration, moyennant ajoute d'additifs, caractérisé en ce que les gaz chauds sont conduits à travers un appareil de filtration à bougies de filtre métalliques à intervalles.

2. Procédé suivant la revendication 1, caractérisé en ce qu'on ajoute des additifs liants par voie physisorptive (adsorbant).

3. Procédé suivant la revendication 2, caractérisé en ce que, comme adsorbant, on ajoute des charbons actifs/cokes actifs, de l'oxyde de silicium, de l'oxyde d'aluminium ou du silicate d'aluminium.

4. Procédé suivant les revendications 1 à 3, caractérisé en ce que les additifs ont une grosseur de grain de 0,05 à 0,3 mm.

5. Procédé suivant les revendications 1 à 4, caractérisé en ce que les additifs sont apportés, avant la filtration, sur les bougies de filtre à intervalles.

## Claims

1. A process for the simultaneous separation of solid and gaseous noxious materials from hot, more particularly sulfurous gases using metallic filters containing a filter cake with the addition of additives, characterised in that the hot gases are conveyed through a filtration device having metallic space filter cartridges.

2. A process according to claim 1, characterised in that physisorptive binding additives (adsorbents) are added.

3. A process according to claim 2, characterised in that activated carbon/activated coke silicon dioxide aluminium oxide or aluminium silicate are added as adsorbents.

4. A process according to claims 1 to 3, characterised in that the additives have a grain size of between 0.05 and 0.3 mm.

5. A process according to claims 1 to 4, characterised in that the additives are applied to the space filter cartridges prior to filtration.

Fig.1

EP 0 269 623 B1

Fig.2

Fig.3